# EUROPÄISCHE PATENTSCHRIFT

(11) **EP 1 891 398 B1**
(45) Veröffentlichungstag und Bekanntmachung des Hinweises auf die Patenterteilung: **29.07.2009**
(21) Anmeldenummer: 06741619.8
(22) Anmeldetag: 01.06.2006
(51) Int. Cl.: G01D 9/00

(54) **ELEKTRONISCHES GERÄT ZUR ERFASSUNG, SPEICHERUNG UND VERARBEITUNG VON MESSDATEN, INSBESONDERE DATENLOGGER**
ELECTRONIC DEVICE FOR RECORDING, STORING AND PROCESSING MEASURED DATA, PARTICULARLY A DATA LOGGER
APPAREIL ELECTRONIQUE POUR DETECTER, ENREGISTRER ET TRAITER DES DONNEES DE MESURE, EN PARTICULIER ENREGISTREUR DE DONNEES

(30) Priorität: 14.06.2005 CH 10082005
(43) Veröffentlichungstag der Anmeldung: 27.02.2008
(73) Patentinhaber: Elpro-Buchs AG, 9471 Buchs (CH)
(72) Erfinder: BISCHOF, Alois, CH-9471 Buchs (CH); RUDOLF, Beat, CH-7302 Landquart (CH)
(74) Vertreter: Bohest AG Branch Ostschweiz
(86) Internationale Anmeldenummer: PCT/CH2006/000294
(87) Internationale Veröffentlichungsnummer: WO 2006/133582

(56) Entgegenhaltungen:
- EP-A- 1 089 179
- EP-A- 1 367 826
- DE-A1- 19 705 615
- US-A- 5 497 419
- US-B1- 6 282 362
- US-B1- 6 317 639
- PATENT ABSTRACTS OF JAPAN Bd. 2003, Nr. 12, 5. Dezember 2003 (2003-12-05) & JP 2004 234119 A (YOKOGAWA ELECTRIC CORP), 19. August 2004 (2004-08-19)
- PATENT ABSTRACTS OF JAPAN Bd. 2000, Nr. 19, 5. Juni 2001 (2001-06-05) & JP 2001 050780 A (CHINO CORP), 23. Februar 2001 (2001-02-23)

## Beschreibung

Die Erfindung betrifft ein elektronisches Gerät zur Erfassung, Speicherung und Verarbeitung von Messdaten, insbesondere einen Datenlogger, gemäss dem Oberbegriff des Patentanspruchs 1.

Elektronische Geräte der gattungsgemässen Art, sogenannte Datenlogger, werden überall dort eingesetzt, wo eine Langzeitaufnahme von Messparametern vorgenommen werden soll, ohne dass ständig Überwachungspersonal vor Ort anwesend ist. So werden Datenlogger vor allem bei Feldversuchen, bei der Überwachung von Transporten, z. B. bei der Überwachung von Beschleunigungs-, Vibrations- und Klimawerten bei LKW- oder Bahntransporten, zur Aufzeichnung von Feuchte- und Temperaturwerten in Lagerhäusern, in der Pharma- und Lebensmittelindustrie, zur Fehleranalyse von Systemen, beispielsweise zur Erfassung von Spannungsschwankungen in oder an einem System, zur Überwachung und Alarmierung bei Produktionsprozessen und bei Qualitätsstudien, in Forschung, Entwicklung und in der Ausbildung verwendet. Auch im Hobbybereich, beispielsweise bei Modellflugzeugen, kommen Datenlogger zur Aufzeichnung und Überwachung von Messdaten zum Einsatz.

Die über einen längeren Zeitraum erfassten und abgespeicherten Messdaten können bei Bedarf weiterverarbeitet, grafisch dargestellt und zur Dokumentation statistisch ausgewertet werden. Neben den Messdaten erfassen Datenlogger vielfach auch sämtliche Ereignisse, wie z.B. einen Batteriewechsel, einen Bedienereingriff oder den Wechsel einer Speicherkarte, die während eines Überwachungszeitraums am Gerät stattfinden. Damit erfüllen derartige Datenlogger insbesondere ein wichtiges Kriterium der Pharma-, Lebensmittel- und Chemieindustrie, das gemeinhin unter dem Kürzel Audit Trail bekannt ist. Die vom Datenlogger erfassten Messdaten und die Daten für den Audit Trail werden in einem internen Gerätespeicher abgelegt. Für die Auswertung aller Daten wird der Datenlogger üblicherweise per Kabel mit einer Datenverarbeitungsanlage, z.B. einem PC, verbunden, um die Daten auszulesen. Das Auslesen der Daten kann auch über ein kabelgestütztes oder auch ein kabelloses LAN oder dergleichen Netzwerk erfolgen. Nach dem Auslesen der Daten werden diese mit einer gerätespezifischen Auswertesoftware bearbeitet, um sie in Form von Tabellen, Grafiken darzustellen und Dokumente oder Berichte zu erstellen. Diese Form der Auswertung bedingt, dass an jedem Arbeitsplatz, an dem die Messdaten dargestellt werden sollen, die entsprechende gerätespezifische Auswertesoftware installiert ist.

Es sind auch bereits Datenlogger bekannt, die mit einem Display ausgestattet sind und es so ermöglichen, Tabellen und Grafiken in beschränktem Umfang auch auf dem Display des Geräts darzustellen. Dazu werden die erfassten Messdaten von einem internen Prozessor weiterverarbeitet und für die Darstellung auf dem Display aufbereitet. Das Ablesen der über das geräteinterne Display in beschränktem Umfang dargestellten Messdaten erfordert die Anwesenheit am Ort des Datenloggers. Eine grafische oder tabellarische Darstellung der Messdaten an einem vom Standort des Datenloggers entfernten Standort ist nur möglich, wenn die dort vorhandene Datenverarbeitungsanlage, z.B. ein PC, mit der entsprechenden gerätespezifischen Auswertesoftware ausgestattet ist. Andere Datenlogger können mit einem Drucker oder Plotter verbunden werden. Dazu wird üblicherweise bei der Verbindung mit dem zusätzlichen Ausgabegerät die beschränkte Verarbeitung der Messdaten durch den internen Prozessor ausgelöst. Die aufbereiteten Daten können dann als Tabelle oder Grafik ausgedruckt oder geplottet werden. Die gedruckte Tabelle oder Grafik kann bei Bedarf über Fernübermittlungsgeräte, z.B. Telefax, an weiter entfernte Orte gesandt werden. Dieser Umweg über die Papierform ist jedoch zeitaufwändig und oft mit qualitativen Problemen in der Darstellung verknüpft. Auch bei diesen bekanten Datenloggern ist eine unmittelbare grafische oder tabellarische Darstellung der Messdaten an einem vom Standort des Datenloggers entfernten Standort nur möglich, wenn die dort vorhandene Datenverarbeitungsanlage, z.B. ein PC, mit der entsprechenden gerätespezifischen Auswertesoftware ausgestattet ist.

Aus der US-5,497,419 ist eine Art Black Box für den Einsatz in Automobilen bekannt.Bei dieser Black Box geht es in erster Linie darum, die von verschiedenen Sensoren erfassten Daten manipulationssicher zu schützen und abzuspeichern. Entsprechend werden die erfassten Daten verschlüsselt, mit einem Videosignal verknüpft und auf ein Speichermedium aufgezeichnet. Die Verschlüsselung der Daten kann u.a. mit einem Verschlüsselungsprogramm erfolgen, welches auf ein "public key" Verfahren zurückgreift. Für die Entschlüsselung der Daten und für deren Auswertung sind spezielle Computerprogramme erforderlich. Eine Darstellung einer spezifischen Auswertung der erfassten Daten in tabellarischer und/oder grafischer Form in einem Standard-Datenformat, das auch ohne Spezialprogramme les- und darstellbar ist, ist nicht vorgesehen.

In der US-6,317,639 B1 sind eine Vorrichtung und ein Verfahren beschrieben, welche es erlauben, erfasste Umweltdaten in grafisch aufbereiteter Form schnell einem grösseren Kreis von interessierten Personen zur Verfügung zu stellen. Dazu werden Messdaten, die z.B. mit einem Datenlogger erfasst worden sind, von einer angeschlossenen Auswertestation automatisch in ein mit Standardsoftware darstellbares grafisches Format umgeformt. Die Bildateien (z.B. GIF oder JPEG) werden von der Auswertestation drahtlos an einen Server übermittelt, von dem sie dann von interessierten Kreisen beispielsweise über das Internet abrufbar sind. Diese können die aus den übermittelten Bilddateien erzeugten Grafiken dann betrachten. Eine weitere Bearbeitung der übermittelten Bilddateien durch die Empfänger ist nicht vorgesehen und auch nicht möglich. Spezielle Auswertungen und Bearbeitungen der Messdaten können nur an der Auswertestation erfolgen, welche mit den dazu erforderlichen speziellen Computerprogrammen ausgestattet ist. Ein vor Ort befindlicher Operator kann dann die Ergebnisse überprüfen und im Fall der Erfassung von Umweltdaten Sofortmassnahmen treffen.

Aufgabe der vorliegenden Erfindung ist es daher, ein elektronisches Gerät zur Erfassung, Speicherung und Verarbeitung von Messdaten, insbesondere einen Datenlogger, dahingehend zu verbessern, dass die über einen Zeitraum erfassten Messdaten auch auf einer Datenverarbeitungsanlage, insbesondere auf einem PC, unmittelbar tabellarisch und grafisch dargestellt werden können, die an einem vom Standort des Datenloggers entfernten Ort aufgestellt und nicht mit der gerätespezifischen Auswertesoftware ausgestattet ist. Dabei soll jedoch die Möglichkeit bestehen, bei Vorhandensein der gerätespezifischen Auswertesoftware auch komplexere Auswertungen und Statistiken, Dokumentationen und Berichte zu erstellen.

Die Lösung dieser Aufgaben besteht in einem Datenlogger, welcher die im kennzeichnenden Abschnitt des Patentanspruchs 1 angeführten Merkmale aufweist. Weiterbildungen und/oder vorteilhafte Ausführungsvarianten der Erfindung sind Gegenstand der abhängigen Patentansprüche.

Durch die Erfindung wird ein Datenlogger geschaffen, der innerhalb eines gemeinsamen Gehäuses verschiedene miteinander in Verbindung stehende Funktionsblöcken aufweist. Diese Funktionsblöcke umfassen wenigstens einen Analog/Digital Konverter zur Umwandlung von Messsignalen in digitale Eingangsdaten, eine Speichereinheit zur Aufzeichnung der digitalen Daten und von digitalisierten Ereignisdaten, einen Zeitgeber, eine Prozessoreinheit zur Bearbeitung der Daten, eine Energieversorgungsquelle sowie Ein- und Ausgangsschnittstellen für Messsignale bzw. digitale Daten und Ereignisdaten. Die Prozessoreinheit ist zur Umformung der digitalen Eingangs- und Zeitdaten in ein Format ausgebildet, welches kompatibel mit frei erhältlicher Standard-software ist und es ermöglicht, die bearbeiteten Daten mit Hilfe dieser Standardsoftware in tabellarischer und/oder grafischer Form auf einem Ausgabegerät darzustellen. Weiters ist die Prozessoreinheit dazu ausgebildet, die digitalen Eingangs- und Zeitdaten sowie die Ereignisdaten als geschützte Rohdaten derart in das erzeugte Datenformat einzubetten, dass diese nur mit einer gerätespezifischen Auswertesoftware les-und bearbeitbar sind.

Die geräteinterne Bereitstellung der Messdaten in einem mit einer allgemein verfügbaren Software lesbaren Format, in welches die Rohdaten, insbesondere die Messdaten und die Ereignisdaten (Audit Trail), gesichert eingebettet sind, bietet die Möglichkeit einer hierarchisch abgestuften Auswertung. Die Messdaten können auf jedem PC tabellarisch und grafisch dargestellt werden, auf dem die allgemein verfügbare Software installiert ist. Ein Zugriff auf die Rohdaten ist dabei zuverlässig verhindert. Auf PCs, die zusätzlich mit der gerätespezifischen Auswertesoftware ausgestattet sind, kann auf den gesicherten Bereich mit den Rohdaten zugegriffen werden, um diese in komplexerer Form auszuwerten, Dokumentationen und Berichte zu erstellen. Die Bereitstellung der Messdaten in einem mit allgemein erhältlichen Mitteln lesbaren Format, in welches die Rohdaten als geschlossener, gesicherter Datensatz eingebettet sind, erfüllt auch die Anforderungen von staatlichen Kontroll- und Registrierungsbehörden, wie z.b. der U.S. FDA.

Gemäß der Erfindung ist die Prozessoreinheit des Datenloggers zur Erzeugung von Datenfiles im PDF-Format ausgebildet. Die Rohdaten sind von der Prozessoreinheit dabei in einen gesicherten Bereich des PDF-Datenfiles einbettbar. Das PDF-Format von der Firma Adobe® ist ein öffentlich verfügbares, offenes Dateiformat zur Darstellung und Übermittlung von Dokumenten. Es ist auf praktisch allen Datenverarbeitungssystemen verfügbar und lauffähig. Das PDF-Format wird von vielen Standardisierungsgremien weltweit für den sicheren und zuverlässigen Austausch und für die Archivierung von Daten eingesetzt.

Das Auslesen der Daten aus dem Datenlogger in eine Datenverarbeitungsanlage, insbesondere einen PC, oder in eine Netzwerk erfolgt über eine am Gerät vorgesehene Ausgangsschnittstelle. Diese ist mit Vorteil als eine USB-Schnittstelle, oder als eine Firewire-Schnittstelle oder dergleichen hochleistungsfähige Datenschnittstelle ausgebildet. Insbesondere die namentlich angeführten Datenschnittstellen sind international standardisiert und ermöglichen sehr hohe Datentransferraten.

Der Datenlogger weist mit Vorteil wenigstens einen internen Messfühler und/oder eine oder mehrere Eingangsschnittstellen für den Anschluss von Messfühlern für gleiche oder unterschiedliche Messparameter auf. Dadurch kann ein Datenlogger quasigleichzeitig mehrere Objekte überwachen und/ oder mehrere Parameter erfassen.

Insbesondere im Transportwesen per LKW oder Bahn kommen Datenlogger zum Einsatz, welche eine Langzeiterfassung von Temperaturen und Luftfeuchte ermöglichen.

Damit die Energieversorgungsquelle, üblicherweise Batterien, nicht unnötig beansprucht werden, erweist es sich von Vorteil, wenn die Formatumformung und - bereitstellung und die Einbettung der Rohdaten in einen geschützten Bereich des erzeugten Datenformates durch die Prozessoreinheit erst beim Auslesen der erfassten Daten erfolgt. In einer zweckmässigen Ausführungsvariante der Erfindung ist dazu eine Einrichtung vorgesehen, die detektiert, ob die Ausgangsschnittstelle des Datenloggers mit einer externen Datenverarbeitungsanlage verbunden ist, und über welche beim Ankoppeln des Datenloggers an die externe Datenverarbeitungsanlage, insbesondere an einen PC, die Prozessoreinheit automatisch aktivierbar ist.

Für eine schnelle Überprüfung der Funktion des Datenloggers sind in einer Variante der Erfindung am Gehäuse ein Display und eine Eingabetastatur vorgesehen.

Der Datenlogger weist vorzugsweise verschiedene Einstellmöglichkeiten, beispielsweise der Echtzeit, der Messrate, der Startzeit, der Stoppzeit, usw., auf. Dazu ist er vorzugsweise vor seinen Einsatz mit Hilfe einer Datenverarbeitungsanlage und einer gerätespezifischen Software konfigurierbar.

Weitere Vorteile und Merkmale ergeben sich aus der nachfolgenden Beschreibung einer beispielsweisen Ausführungsvariante der Erfindung unter Bezugnahme auf die schematischen Zeichnungen. Es zeigen in nicht massstabsgetreuer Darstellung:
- Fig. 1: ein Blockschema eines Datenloggers;
- Fig. 2: eine symbolische, schematische Darstellung eines erzeugten pdf-files; und
- Fig. 3: ein schematisches Beispiel einer Darstellung mit Hilfe einer gerätespezifischen Auswertesoftware.

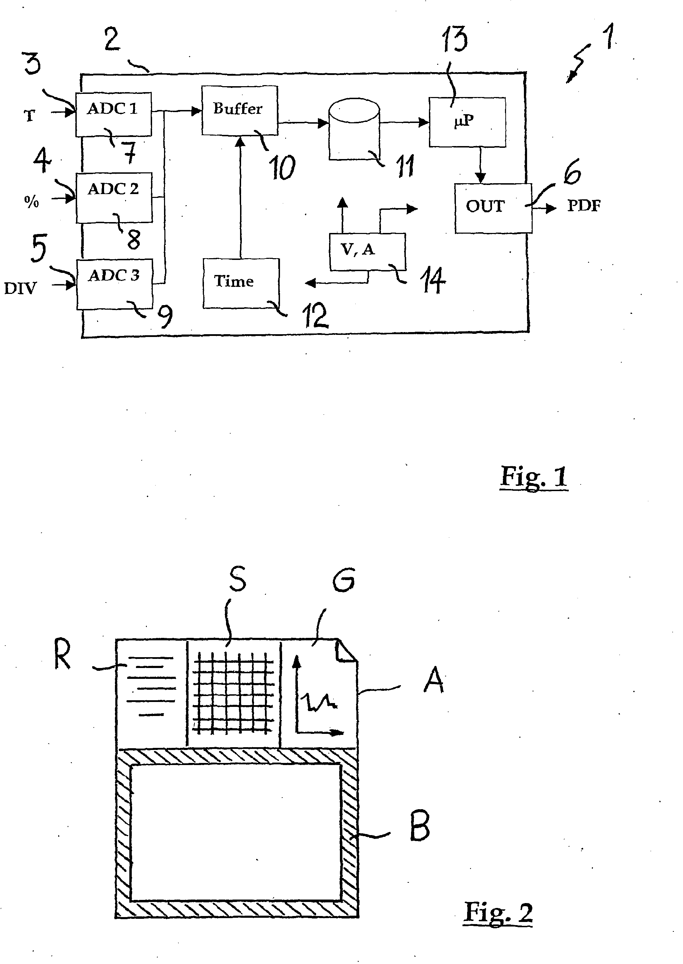

Der in Fig. 1 beispielsweise dargestellte Datenlogger trägt gesamthaft das Bezugszeichen 1. Der Datenlogger 1 weist ein Gehäuse 2 auf, das mit Ein- und Ausgängen für Messsignale bzw. Messdaten und digitalisierte Daten ausgestattet ist. Bei dem dargestellten Ausführungsbeispiel sind auf der Eingangsseite drei Eingänge 3, 4, 5 und ein Ausgang 6 angedeutet. Die Eingänge 3, 4 sind mit Anschlussschnittstellen für verschiedene Messfühler versehen. Im dargestellten Ausführungsbeispiel handelt es sich dabei um Schnittstellen für Messfühler für Temperaturen T bzw. für relative Luftfeuchtemessungen %. Der dritte Eingang 5 dient für die Erfassung von Ereignisdaten DIV, die beispielsweise ein Batteriewechsel, Bedienereingriffe oder der Wechsel einer Speicherkarte während des Überwachungszeitraums usw. sein können. Die Darstellung als
"Eingang 5" ist dabei nur symbolisch zu verstehen und soll nicht bedeuten, dass es sich dabei unbedingt um eine Anschlussschnittstelle für ein Anschlusskabel handelt. Der Datenlogger kann auch mit einem oder mehreren internen Messfühlern und/oder einer oder mehreren Anschlussschrtittstellen für weitere Messfühler ausgestattet sein.

Die an den Eingängen 3, 4, 5 anliegenden Messdaten T, %, DIV werden jeweils in zugehörigen Analog/ Digital Konvertern 7, 8, 9 digitalisiert und über einen Bufferspeicher 10 zu einer Speichereinheit 11 transportiert und dort in digitaler Form abgespeichert. Ein Zeitgeber 12 erfasst zu jedem Messsignal das zugehörige Datum und die zugehörige Zeit und gibt diese Information über den Bufferspeicher 10 an die Speichereinheit 11 weiter, wo sie zusammen mit den Messdaten abgespeichert wird. Die digitalisierten Mess-, Zeit- und Ereignisdaten (T, %, DIV) werden vor dem Ausgang 6 einem Mikroprozessor 13 zugeführt, der sie für die Ausgabe bzw. für eine Anzeige auf einem am Gehäuse 2 vorgesehenen Display weiterverarbeitet. Eine Energieversorgungseinheit, welche die Funktionsblöcke mit der erforderlichen Energie versorgt, ist mit dem Bezugszeichen 14 versehen. Beispielsweise wird die Energie von einer Block-batterie oder dergleichen bereitgestellt.

Der Mikroprozessor 13 ist derart ausgebildet, dass die von der Speichereinheit 11 ausgelesenen digitalen Eingangs- und Zeitdaten in ein Format umwandelbar sind, welches kompatibel mit frei erhältlicher Standardsoftware ist und es ermöglicht, die bearbeiteten Daten mit Hilfe dieser Standardsoftware in tabellarischer und/oder grafischer Form auf einem Ausgabegerät darzustellen. Weiters ist die Prozessoreinheit 13 dazu ausgebildet, die digitalen Eingangs- und Zeitdaten sowie die Ereignisdaten als geschützte Rohdaten derart in das erzeugte Datenformat einzubetten, dass diese nur mit einer gerätespezifischen Auswertesoftware les- und bearbeitbar sind. Es handelt sich bei diesem Format um das öffentlich verfügbare, offene PDF-Format. Die Rohdaten sind dabei in einen geschlossenen, geschützten Bereich des PDF -Datenfiles eingebettet. Die Erzeugung des PDF-Datenfiles erfolgt mit Vorteil erst, wenn der Mikroprozessor 13 über einen in die Ausgangsschnittstelle 6 integrierten Anschlusskontakt aktiviert wird. Dies erfolgt beim Verbinden eines Datenkabels mit der Ausgangsschnittstelle 6. Beispielsweise handelt es sich bei der Ausgabeschnittstelle um eine USB-Schnittstelle, oder eine Firewire-Schnittstelle oder dergleichen hochleistungsfähige Datenschnittstelle. Bei einer genügend grossen Batterieleistung könnte die Erzeugung des pdf-Datenfiles auch laufend erfolgen und nachgeführt werden. Das Gehäuse 2 des Datenloggers 1 kann auch noch mit einer Eingabetastatur ausgestattet sein, die es ermöglicht, verschiedene Modi anzuwählen, begrenzte Auswertungen einzuleiten, um diese über ein Display darzustellen, Alarme zu löschen usw.

Fig. 2 gibt symbolisch den Aubau des erzeugten PDF-Datenfiles wieder. Das Datenfile weist einen offenen Bereich A und einen geschlossenen, gesicherten Bereich B auf. Der offene Bereich kann beispielsweise einen Statusreport R, eine tabellarische Auflistung S der Eingangs- und Zeitdaten, sowie eine grafische Darstellung G des zeitlichen Verlaufs der aufgenommenen Messdaten umfassen. Diese liegen alle im frei verfügbaren PDF-Format vor und können damit praktisch auf jedem PC dargestellt werden, der mit dem kostenlos erhältlichen Adobe® Acrobat Reader® ausgestattet ist. Die digitalisierten Rohdaten (digitalisierte Mess- und Zeitdaten, Ereignisdaten) sind in einen geschlossenen, gesicherten Bereich des PDF-Datenfiles eingebettet. Die Rohdaten liegen zwar im PDF-Datenfile vor und werden bei einer Weiterleitung des PDF-Datenfiles z.B. per e-mail mitgesandt; sie können jedoch nur auf einem PC geöffnet, gelesen und bearbeitet werden, der mit der gerätespezifischen Auswertesoftware des Datenloggers ausgestattet ist.

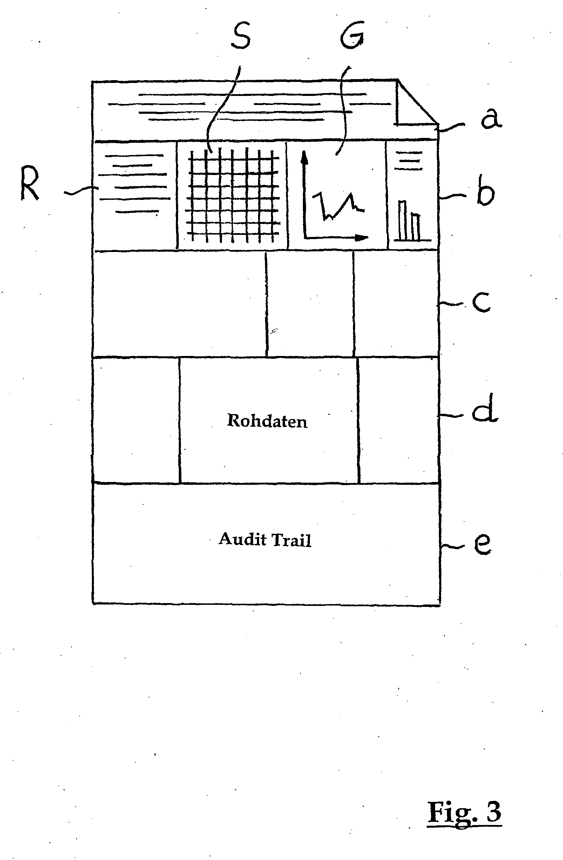

Fig. 3 skizziert schematisch eine mit Hilfe der gerätespezifischen Auswertesoftware generierte Darstellung. Diese weist mehrere Bereiche a - e auf, in denen unterschiedliche Auswertungen, Kopfzeilen, Kommentare, Statistiken und Diagramme dargestellt sind. Der Statusreport R, die tabellarische Auflistung S der Eingangs- und Zeitdaten, sowie die grafische Darstellung G des zeitlichen Verlaufs der aufgenommenen Messdaten, die im offenen Bereich des PDF-Datenfiles abgelegt waren, finden sich beispielsweise in einem Bereich b wieder. Die Rohdaten sind beispielsweise im Bereich d angeordnet und können vollumfänglich dargestellt, gelesen und bearbeitet werden. Schliesslich ist beispielsweise im Bereich e der sogenannten Audit Trail wiedergegeben, der eine vollständige Auflistung der registrierten Ereignisse, wie z.B. Batteriewechsel, Bedienereingriffe oder den Wechsel einer Speicherkarte, die während eines Überwachungszeitraums am Datenlogger stattgefunden haben, dokumentiert.

## Patentansprüche

1. Datenlogger mit innerhalb eines gemeinsamen Gehäuses (2) angeordneten Funktionsblöcken, die wenigstens einen Analog/Digital Konverter (7 - 9) zur Umwandlung von Messsignalen (T, %) in digitale Eingangsdaten, eine Speichereinheit (11) zur Aufzeichnung der digitalen Daten und von digitalisierten Ereignisdaten (DIV), einen Zeitgeber (12), eine Prozessoreinheit (13) zur Bearbeitung der Daten, eine Energieversorgungsquelle (14) sowie Ein- und Ausgangsschnittstellen (3 - 6) für Messsignale bzw. digitale Daten und Ereignisdaten umfassen, **dadurch gekennzeichnet, dass** die Prozessoreinheit (13) zur Erzeugung von Datenfiles mit den digitalen Eingangs- und Zeitdaten im PDF-Format ausgebildet ist, welches kompatibel mit frei erhältlicher Standardsoftware ist und es ermöglicht, die bearbeiteten Daten mit Hilfe dieser Standardsoftware in tabellarischer und/oder grafischer Form auf einem Ausgabegerät darzustellen, und die digitalen Eingangs- und Zeitdaten sowie die Ereignisdaten von der Prozessoreinheit (13) als geschützte Rohdaten derart in einen gesicherten Bereich (B) des PDF-Datenfiles eingebettet werden, dass diese nur mit einer gerätespezifischen Auswertesoftware les-und bearbeitbar sind.

2. Datenlogger nach Anspruch 1, **dadurch gekennzeichnet, dass** die Ausgangsschnittstelle (6) als eine USB-Schnittstelle, oder als eine Firewire-Schnittstelle oder dergleichen hochleistungsfähige Datenschnittstelle ausgebildet ist.

3. Datenlogger nach einem der vorangehenden Ansprüche, **dadurch gekennzeichnet, dass** wenigstens ein interner Messfühler und/oder eine oder mehrere Eingangsschnittstellen (3, 4) für den Anschluss von Messfühlern für gleiche oder unterschiedliche Messparameter vorgesehen ist bzw. sind.

4. Datenlogger nach einem der vorangehenden Ansprüche, **dadurch gekennzeichnet, dass** der Datenlogger für die Langzeiterfassung von Temperaturen (T) und Luftfeuchte (%) ausgebildet ist.

5. Datenlogger nach einem der vorangehenden Ansprüche, **dadurch gekennzeichnet, dass** die Formatumformung und -bereitstellung und die Einbettung der Rohdaten in einen geschützten Bereich (B) des erzeugten Datenformates (Fig. 2) durch die Prozessoreinheit (13) erst beim Auslesen der erfassten Daten aktivierbar ist.

6. Datenlogger nach Anspruch 5, **dadurch gekennzeichnet, dass** eine Einrichtung vorgesehen ist, die eine Ankopplung der Ausgangsschnittstelle (6) des Datenloggers an eine externe Datenverarbeitungsanlage detektiert, und über welche beim Ankoppeln des Datenloggers an die externe Datenverarbeitungsanlage, insbesondere an einen PC, die Prozessoreinheit (13) automatisch aktivierbar ist.

7. Datenlogger nach einem der vorangehenden Ansprüche, **dadurch gekennzeichnet, dass** am Gehäuse (2) ein Display und eine Eingabetastatur vorgesehen sind.

8. Datenlogger nach einem der vorangehenden Ansprüche, **dadurch gekennzeichnet, dass** er mit Hilfe einer Datenverarbeitungsanlage und einer gerätespezifischen Software konfigurierbar ist.

## Claims

1. Data logger with function blocks arranged inside a common housing (2), which comprise at least one analog/digital converter (7 - 9) for converting measurement signals (T, %) into digital input data, a storage unit (11) for the recording of the digital data and of digitised event data (DIV), a clock (12), a processor unit (13) for processing the data, a power supply source (14) and input and output interfaces (3 - 6) for measurement signals or digital data and event data, **characterised in that** the processor unit (13) is constructed for generating data files with the digital input and timing data in PDF format, which is compatible with freely available standard software and enables the processed data to be displayed in tabular and/or graphical form on an output device using this standard software, and the digital input and timing data as well as the event data are embedded by the processor unit (13) as protected raw data in a secured region (B) of the PDF data files, in such a way that they can be read and processed only with device-specific analysis software.

2. Data logger according to Claim 1, **characterised in that** the output interface (6) is constructed as a USB interface, or as a Firewire interface or similar high-performance data interface.

3. Data logger according to any one of the preceding claims, **characterised in that** at least one internal measurement sensor and/or one or more input interfaces (3, 4) is / are provided for connecting measurement sensors for identical or different measurement parameters.

4. Data logger according to any one of the preceding claims, **characterised in that** the data logger is constructed for the long-term recording of temperatures (T) and air humidity (%).

5. Data logger according to any one of the preceding claims, **characterised in that** the format conversion and provision, and the embedding of the raw data into a protected area (B) of the generated data format (Fig. 2), can be activated only when the recorded data is read out.

6. Data logger according to Claim 5, **characterised in that** a device is provided which detects a connection of the output interface (6) of the data logger to an external data processing system, and via which the processor unit (13) can be automatically activated when the data logger is coupled to the external data processing system, in particular to a PC.

7. Data logger according to any one of the preceding claims, **characterised in that** a display and an input keyboard are provided on the housing (2).

8. Data logger according to any one of the preceding claims, **characterised in that** it can be configured by means of a data processing system and device specific software.

## Revendications

1. Enregistreur de données avec des blocs fonctionnels logés au sein d'un boîtier commun (2), lesquels comprennent au moins un convertisseur analogique/numérique (7-9) pour la conversion des signaux de mesure (T, %) en données d'entrée numériques, une unité de mémoire (11) pour l'enregistrement des données numériques et des données d'évènements numérisées (DN), un générateur de rythme (12), une unité de processeur (13) pour le traitement des données, une source d'alimentation en énergie (14) ainsi que des interfaces d'entrée et de sortie (3-6) pour les signaux de mesure ou les données numériques et les données d'évènements, **caractérisé en ce que** l'unité de processeur (13) se présent sous une forme capable de générer des fichiers de données au format PDF à partir des données d'entrée numériques et des données de temps, lequel format de fichiers est compatible avec les logiciels standard disponibles gratuitement et permet de représenter les données traitées sous forme de tableau et/ou de graphique à l'aide de ces logiciels standard sur un appareil de sortie, et que les données d'entrée et les données de temps numériques ainsi que les données d'évènements provenant de l'unité de processeur (13) sont incorporées sous forme de données brutes protégées dans une section sécurisée (B) du fichier au format PDF de telle manière qu'elles ne puissent être lues et traitées qu'au moyen d'un logiciel d'exploitation propre à l'appareil.

2. Enregistreur de données selon la revendication 1, **caractérisé en ce que** l'interface de sortie (6) se présente sous la forme d'une interface USB, d'une interface Firewire ou d'une interface de données à hautes performances similaire.

3. Enregistreur de données selon l'une quelconque des revendications précédentes, **caractérisé en ce qu'**au moins une sonde de mesure interne et/ou une ou plusieurs interfaces d'entrée (3, 4) pour le raccordement de sondes de mesure pour des paramètres identiques ou différents est/sont prévue(s).

4. Enregistreur de données selon l'une quelconque des revendications précédentes, **caractérisé en ce que** l'enregistreur de données se présente sous forme permettant l'enregistrement de longue durée de températures (T) et de l'humidité de l'air (%).

5. Enregistreur de données selon l'une quelconque des revendications précédentes, **caractérisé en ce que** la conversion et la mise à disposition du format et l'incorporation des données brutes dans une section sécurisée (B) du format de données généré (fig. 2), par l'unité de processeur (13), n'est activable qu'à l'extraction des données enregistrées.

6. Enregistreur de données selon la revendication 5, **caractérisé en ce qu'**il est prévu un dispositif pour détecter le couplage de l'interface de sortie (6) de l'enregistreur de données à une installation de traitement de données externe, par lequel, au couplage de l'enregistreur de données à l'installation de traitement de données externe, particulièrement un PC, l'unité de processeur (13) peut être activée automatiquement.

7. Enregistreur de données selon l'une quelconque des revendications précédentes, **caractérisé en ce qu'**un écran et un clavier de saisi sont prévus au boîtier (2).

8. Enregistreur de données selon l'une quelconque des revendications précédentes, **caractérisé en ce que** l'enregistreur de données est configurable au moyen d'une installation de traitement de données et d'un logiciel propre à l'appareil.
